# FASCICULE DE BREVET EUROPEEN

(11) **EP 1 376 056 B1**
(45) Date de publication et mention de la délivrance du brevet: **09.02.2011**
(21) Numéro de dépôt: 03291432.7
(22) Date de dépôt: 13.06.2003
(51) Int. Cl.: G01C 15/00

(54) **Système modulaire de génération d'un plan de niveau par laser**
Modulares System zur Erzeugung einer Referenzebene mittels Laser
Modular system for generating a reference plane using laser

(30) Priorité: 18.06.2002 FR 0207648
(43) Date de publication de la demande: 02.01.2004
(73) Titulaire: Agatec, 78600 Le Mesnil Le Roi (FR)
(72) Inventeur: Gamal, Albert, 78600 Le Mesnil Le Roi (FR); Chiorean, Mircea, 95220 Herblay (FR); Persin, Didier, 75013 Paris (FR); Franclet, Roland, 95490 Vaureal (FR)
(74) Mandataire: Debay, Yves

(56) Documents cités:
- EP-A- 0 806 630
- BE-A- 683 422

## Description

La présente invention concerne le domaine des appareils de détermination de niveau. L'invention concerne plus particulièrement un système modulaire de détermination de niveau du type laser.

En général, les appareils de détermination de niveau sont utilisés en construction, par exemple lors de la mise en place d'une surface horizontale fixée sur des piliers ou des parois latérales, pour un nivellement de terrain ou encore pour des mesures par un géomètre.

Les appareils de l'art antérieur comprennent généralement un boîtier de base intégrant une source laser qui envoie un faisceau vertical ascendant vers un pentaprisme (20) tournant. Le pentaprisme (20) en rotation redirige alors le faisceau vertical, selon un angle de sensiblement 90° pour balayer un plan de niveau horizontal lumineux. Dans certaines conditions, ces appareils ne peuvent pas être positionnés à l'horizontale et présentent alors des plans inclinés. En réponse à ce défaut, des niveaux ont été ajoutés pour permettre de compenser les éventuelles inclinaisons.

Il est connu dans l'art antérieur, par le brevet US 6 014 211, un dispositif générant un plan de niveau par laser, composé d'un boîtier contenant un générateur de faisceau laser horizontal et un miroir placé dans un tube vertical, surmonté d'un assemblage à moteur rotatif faisant tourner un pentaprisme (20). Avec ce type de dispositif, il n'est pas possible d'effectuer un réglage fin de l'orientation des différents éléments comme le moteur, le générateur de faisceau laser, le tube acheminant le faisceau laser, ces éléments étant relativement dispersés. La fiabilité de ce dispositif est sensiblement diminuée du fait du manque d'intégration entre les différents composants. De plus un tel dispositif, avec pendule suspendu par fil, peut manquer de robustesse pour résister aux conditions difficiles de chantier.

La présente invention a donc pour objet de pallier un ou plusieurs des inconvénients de l'art antérieur en définissant un système modulaire de détermination de niveau du type laser de grande précision et fiabilité qui présente une intégration dans un même boîtier du module motorisé avec les éléments de mise à niveau et la source laser.

Cet objectif est atteint grâce à un système modulaire de détermination de niveau par laser, comportant dans un boîtier un générateur de faisceau laser solidaire de moyens de positionnement par rapport à un plan parallèle au plan de base dudit boîtier, le faisceau laser étant orienté vers un puits central du boîtier occulté par aucun obstacle et traversant au préalable des moyens de collimation, un module d'entraînement en rotation d'un ensemble optique comprenant au moins un plan de réflexion, ledit module d'entraînement en rotation étant disposé selon une direction sensiblement coaxiale avec l'axe du faisceau laser, caractérisé par le fait que le module d'entraînement en rotation dudit ensemble optique comprend un moteur sans balai à commutation électronique aligné avec le puits central du boîtier et la faisceau laser, le moteur sans balai ayant un arbre creux et un stator suspendu à un élément fixe en rotation autour d'un axe parallèle à celui du faisceau laser, ledit élément fixe étant inclinable par un module de détermination et de réglage de l'inclinaison par rapport à un plan de référence parallèle au plan d'appui de l'enveloppe du boîtier, ledit générateur de faisceau laser étant incorporé avec notamment deux niveaux dans un corps solidaire du moteur sans balai.

Selon une autre particularité de l'invention, ledit moteur sans balai comprend un stator bobiné, un rotor à aimant permanent et un codeur optique lié au rotor par l'arbre creux du moteur, ledit codeur optique, incrémental et associé à des moyens électroniques de détection de la position du rotor, permettant de connaître avec précision la position du rotor, la position du faisceau laser et de contrôler la rotation ou les oscillations entre deux positions du moteur.

Selon une autre particularité de l'invention, lesdits moyens électroniques de détection de la position du rotor comprennent au moins une carte électronique de détection de la position du codeur et de commande du moteur.

Selon une autre particularité de l'invention, ledit module de détermination et de réglage de l'inclinaison comporte des moyens de réglage d'inclinaison manuels dudit élément fixe en rotation.

Selon une autre particularité, ledit module de détermination et de réglage de l'inclinaison comporte un dispositif à au moins deux organes de mise à niveau dudit élément fixe en rotation, ces organes de mise à niveau incluant notamment un micro-moteur servant au calage d'au moins une vis vissée selon un axe vertical du boîtier.

Selon une autre particularité, ledit module de détermination et de réglage de l'inclinaison comporte un dispositif à deux vérins solidaires de deux angles dudit élément fixe en rotation et ledit module d'entraînement en rotation, les deux vérins servant à effectuer un déplacement relatif de l'axe d'inclinaison dudit module d'entraînement en rotation par rapport à l'axe constituant la verticalité du boîtier.

Selon une autre particularité, lesdits vérins sont électriques, le pilotage de ces vérins étant réalisé par l'intermédiaire d'au moins une carte électronique de commande.

Selon une autre particularité, deux niveaux perpendiculaires l'un à l'autre et positionnés dans un plan parallèle au plan de base sur lequel repose le socle du boîtier sont incorporés dans un corps incluant le générateur de faisceau laser, la direction du faisceau laser étant orientée par rapport audit plan de base, ces deux niveaux détectant la position relative du générateur de faisceau laser par rapport à un plan de référence.

Selon une autre particularité, un troisième niveau dit vertical et perpendiculaire aux deux autres est incorporé au corps qui inclue le générateur de faisceau laser pour détecter la position relative du générateur de faisceau laser par rapport à un plan de référence.

Selon une autre particularité, les niveaux incorporés avec le générateur de faisceau laser sont des nivelles électroniques à lecture optique, la lecture optique étant effectuée par l'intermédiaire d'au moins une carte électronique.

Selon une autre particularité, ledit module de détermination et de réglage de l'inclinaison de l'élément fixe en rotation comprend un circuit imprimé, des photodétecteurs et des moyens actionneurs déterminant l'inclinaison de ce module par rapport au socle du boîtier.

Selon une autre particularité, ledit ensemble optique rotatif comprend un pentaprisme tournant, le générateur de faisceau laser, équipé d'une diode laser, étant aligné avec ledit arbre creux et ledit pentaprisme selon un axe orienté selon la verticalité du boîtier, ledit pentaprisme étant orienté pour réfléchir le faisceau laser d'un angle de sensiblement 90°.

Selon une autre particularité, lesdits moyens de positionnement par rapport à un plan parallèle au plan de base dudit boîtier comprennent au moins un élément de vissage réglable manuellement.

Selon une autre particularité, lesdits moyens de positionnement par rapport à un plan parallèle au plan de base dudit boîtier comprennent au moins un vérin électrique.

Selon une autre particularité, le système selon l'invention comporte un dispositif à double pente, chaque pente étant composée notamment par deux plateaux, au moins un de ces plateaux étant mobile et articulé par l'intermédiaire d'au moins deux billes, les deux billes constituant une génératrice d'un plan et étant sollicitées selon une autre génératrice de ce plan par un moyen élastique vers une position de rappel et dans l'autre sens par un appareillage électromécanique permettant de régler l'inclinaison de pente.

Selon une autre particularité, un des plateaux du dispositif à double pente est commun aux deux pentes.

Selon une autre particularité, les plateaux mobiles du dispositif à double pente sont montés pivotant par rapport audites deux billes, les axes de rotation des plateaux mobiles étant orientés perpendiculairement.

Selon une autre particularité, ledit appareillage électromécanique comporte au moins deux moteurs pas à pas gérés par des moyens de commande électroniques tenant compte de valeurs représentatives des angles de rotation des plateaux mobiles saisies par l'utilisateur sur une interface et d'au moins une table de correction.

Selon une autre particularité, le système selon l'invention comporte un dispositif à simple pente positionné entre ledit moteur sans balai (5) et l'emplacement des niveaux (30, 31).

Selon une autre particularité, le boîtier comprend des moyens de préhension et un logement destiné à une batterie fermé à l'aide d'un couvercle amovible, une console avec écran d'affichage et boutons de commande étant associée audit boîtier pour contrôler notamment ledit module de détermination et de réglage de l'inclinaison et la carte électronique de détection de la position du codeur et de commande du moteur.

L'invention, avec ses caractéristiques et avantages, ressortira plus clairement à la lecture de la description faite en référence aux dessins annexés donnés à titre d'exemples non limitatifs dans lesquels :
- la figure 1 représente une vue en perspective éclatée d'une variante de réalisation du contenu boîtier,
- la figure 2 représente le boîtier du système selon l'invention,
- la figure 3 représente schématiquement le système selon l'invention en cours d'utilisation,
- la figure 4 représente schématiquement un dispositif de nivellement automatique utilisé dans l'invention,
- la figure 5 représente une vue en coupe d'une variante de réalisation avec dispositif à double pente,
- la figure 6 représente une vue en perspective éclatée d'une variante de réalisation du contenu du boîtier,
- la figure 7 représente le plateau circulaire servant d'élément fixe pour le calage du stator.

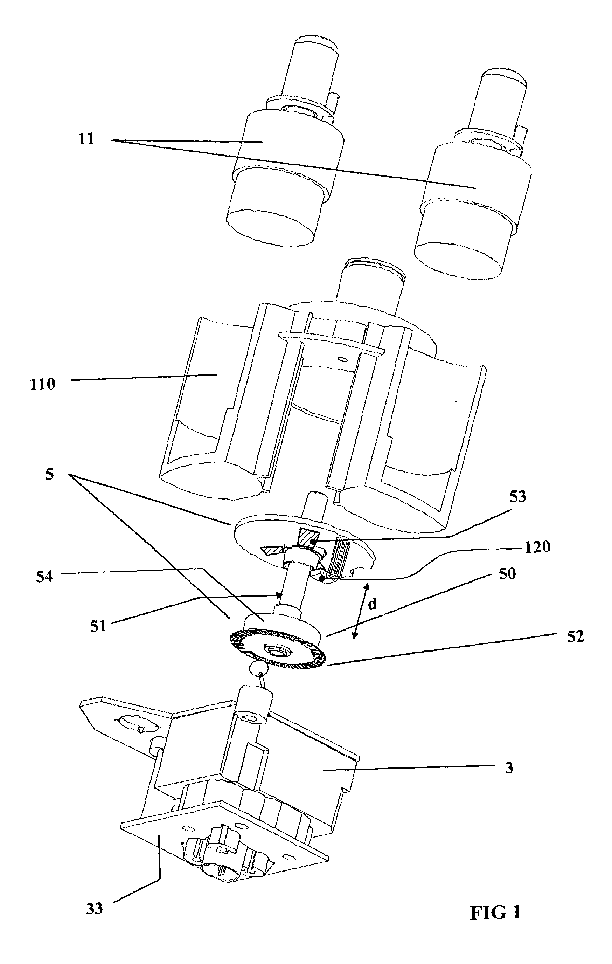

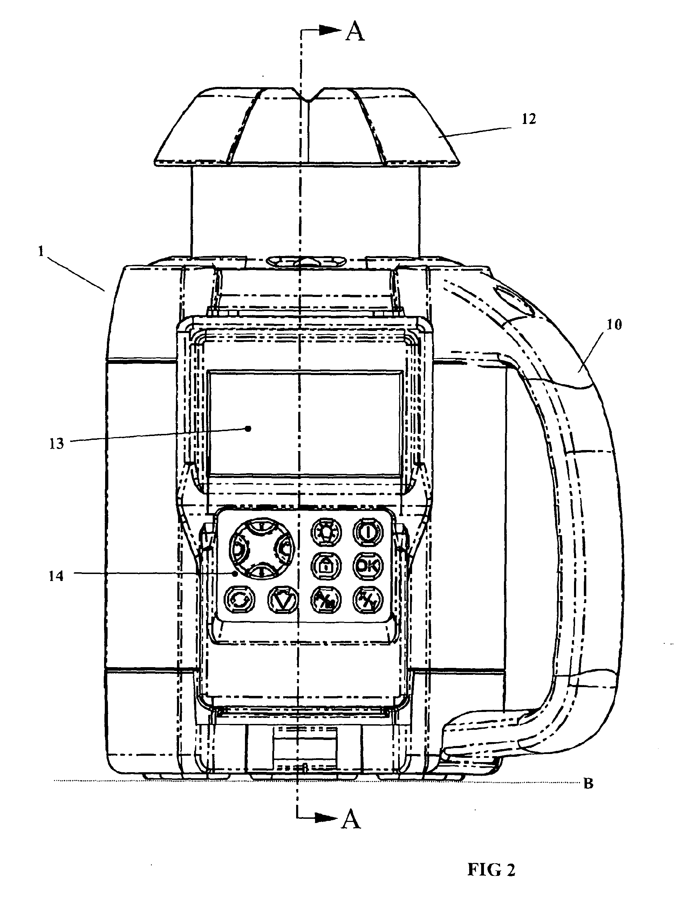

L'invention va être à présent décrite en référence aux figures 1, 2 et 3. Le système modulaire de détermination de niveau par laser comporte d'une part un boîtier fixe (1) qui contient un générateur de faisceau laser, un puits central sans obstacle dans lequel passe ledit faisceau et un module motorisé (5) entraînant en rotation un arbre creux (51) dont une extrémité ressort dudit boîtier (1) et d'autre part une tête mobile (2) solidaire de l'extrémité sortante de l'arbre creux (51) entraîné en rotation qui comprend un ensemble optique réfléchissant le faisceau laser issu du module ou corps (3) renfermant la source laser. Comme représenté à la figure 2, le boîtier (1) peut comporter une coupole (12) qui protège la tête mobile (2) de chocs éventuels. Le système selon l'invention est particulièrement adapté pour des rayons d'action (R) du laser variant entre 0 et 150 m. Le boîtier (1) peut être métallique ou moulé en matière plastique, équipé de moyens de préhension (10) tels qu'une ou plusieurs poignées, des cavités pour le passage des doigts, etc. Le boîtier (1) peut inclure un logement destiné à une batterie (100) fermé à l'aide d'un couvercle amovible. Les batteries employées, rechargeables, sont de 2,4 ou 4,8 V. Le système modulaire selon l'invention est compact, de dimensions inférieures au mètre, et peut être monté facilement sur un trépied (7) ou autres moyens de support analogues lors de son utilisation. Son poids n'excède pas 3,5 kg.

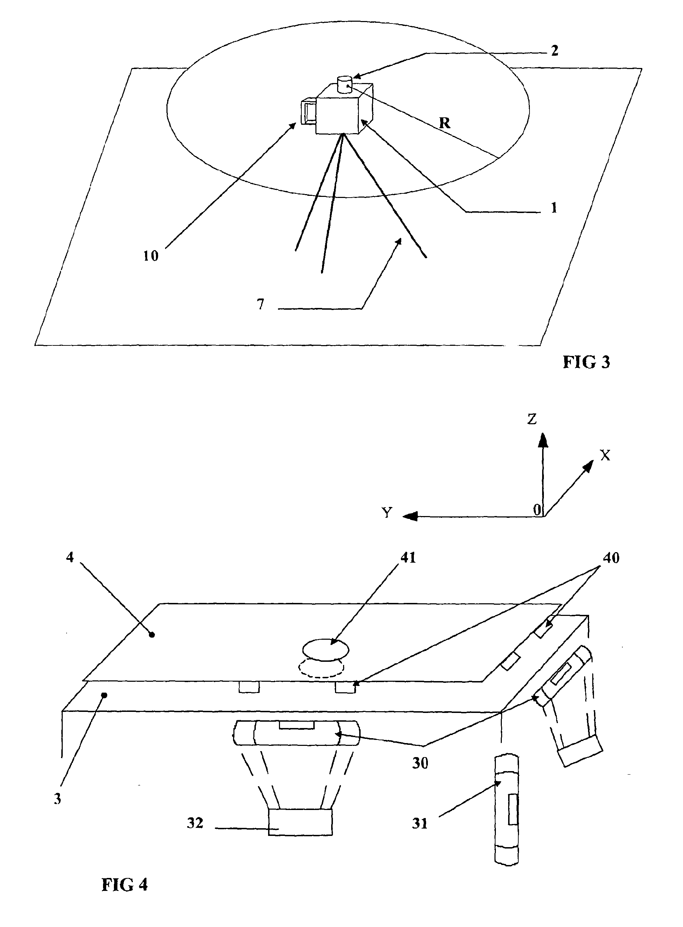

Comme illustré à la figure 1, le générateur de faisceau laser est positionné quasiment à une extrémité du boîtier (1), l'arbre creux (51) présentant une partie en saillie (non représentée) qui ressort du boîtier (1) à l'autre extrémité. Dans un mode de réalisation de l'invention, ledit générateur de faisceau laser peut être solidaire de moyens de positionnement par rapport à un plan parallèle au plan de base (B) du boîtier (1). Ces moyens de positionnement sont par exemple une ou plusieurs vis de calage solidaire(s) de la base (33) du corps (3) qui intègre ledit générateur de faisceau laser ou bien au moins un vérin électrique réglable. Le générateur de faisceau laser peut être un appareil standard à diode laser, rayonnant par exemple à une longueur d'onde de 635 nm et d'une puissance d'environ 1 mW. Ledit corps (3) intègre également des niveaux (30, 31) qui sont représentés à la figure 4. Après la phase dite de calage ou calibrage visant à positionner l'axe du faisceau laser de manière orthogonale par rapport à la base (33) du corps (3) supportant notamment lesdits niveaux (30, 31), le faisceau laser est aligné avec le puits central du boîtier (1) et ledit module motorisé (5).

Le module motorisé (5) est un module d'entraînement en rotation de l'arbre creux (51) auquel est solidarisée la tête mobile (2). Il s'agit plus précisément d'un moteur sans balai à commutation électronique comprenant un stator bobiné (53) et un rotor à aimant permanent (50) incluant ledit arbre creux (51). Dans le mode de réalisation préféré de l'invention, et de manière non limitative, le module motorisé (5) comprend également un codeur optique (52) incrémental permettant de connaître avec précision la position angulaire du rotor (50) et donc du faisceau laser réfléchi par le pentaprisme (20) de la tête mobile (2). Le rotor (50) comprend une couronne (54) dans laquelle est placé au moins un aimant permanent. La commutation, c'est-à-dire le changement successif des pôles d'alimentation des bobines du stator (53) permet de créer un champ tournant qui entraîne la rotation du rotor (50). La couronne (54) comporte des éléments de signalisation qui peuvent être détectés par des capteurs optoélectroniques du codeur optique (52). Ces éléments de signalisation peuvent être un disque comportant des zones opaques et des zones translucides placées sur le codeur optique (52) permettant de déterminer à l'aide d'un photodétecteur (120) éclairé par une diode électroluminescente la position du rotor (50). Dans ce mode de réalisation, ladite couronne (54) est parallèle au codeur optique (52) dont la forme est circulaire, placée à une distance (d) de quelques centimètres, par exemple 3 cm. Le diamètre de la couronne (54) du rotor (50) varie par exemple de 20 à 40 mm. Le codeur optique (52) est couplé à des moyens électroniques de détection de la position du rotor (50) afin de contrôler la rotation ou les oscillations entre deux positions du moteur. Ces moyens électroniques auxquels est couplé le codeur optique (52) comprennent au moins une carte électronique de détection de la position dudit codeur (52) et de commande du module motorisé (5). Dans d'autres variantes, le module motorisé (5) peut être dépourvu de codeur optique (52) afin de simplifier l'appareillage. Plusieurs moteurs peuvent être associés pour générer en même temps plusieurs plans laser.

La tête mobile (2) avec ensemble optique comprend au moins un plan de réflexion pour renvoyer le faisceau laser selon un angle de sensiblement 90°. Dans le mode de réalisation préféré de l'invention, ladite tête mobile (2) comporte un pentaprisme (20) tournant qui suit la rotation de l'arbre creux (51).

Dans une variante de réalisation, un module dit supérieur (110) placé au-dessus du module motorisé (5) comprend deux axes articulés entre eux à l'aide d'un joint de cardan perforé pour ne pas obturer le puits central par lequel chemine le faisceau laser. Le stator (53) bobiné est rendu solidaire d'un élément fixe en rotation autour d'un axe parallèle à celui du faisceau laser. Cet élément est inclinable par un module de détermination et de réglage de l'inclinaison par rapport à un plan de référence rigoureusement parallèle au plan d'appui de l'enveloppe du boîtier (1). Cet élément est par exemple ledit module supérieur (110). Dans le mode de réalisation présenté à la figure 1, des nivelles sont insérés dans un corps (3) qui contient le générateur de faisceau laser et déterminent par action sur des moyens de réglage un plan de référence rigoureusement horizontal et un plan de référence rigoureusement vertical. Ledit module de détermination et de réglage de l'inclinaison peut comprendre un système à deux vérins (11) pour régler l'inclinaison dudit module supérieur (110). Lorsque le boîtier (1) est placé sur une surface d'appui par son socle, l'inclinaison prise en compte est l'inclinaison par rapport à un plan de référence rigoureusement horizontal déterminé par au moins deux nivelles dites horizontales. Lorsque le boîtier (1) est couché sur un côté, c'est toujours l'inclinaison par rapport à un plan de référence rigoureusement horizontal qui est prise en compte, ce plan horizontal étant déterminé grâce à l'une des nivelles dites horizontales et à une nivelle dite verticale. Des logements de réception de la course des vérins (11) reliés de manière solidaire au stator (53) peuvent jouer le rôle dudit élément fixe en rotation. Les vérins (11), par exemple électriques, sont sollicités en appui, via des moyens de rappel élastique, contre la paroi supérieure du boîtier (1) ou des surfaces d'appui analogues qui sont fixes. Dans les cas où le boîtier (1) est positionné de manière droite avec appui du socle sur un plancher sensiblement horizontal, les deux vérins (11) permettent d'effectuer un déplacement relatif de l'axe d'inclinaison du stator (53) par rapport à un axe de référence du système qui est un axe perpendiculaire au plan d'appui du boîtier (1). Le générateur de faisceau laser reste solidaire du stator (53) lorsque ce dernier est incliné. Le pilotage des vérins (11) peut être réalisé par l'intermédiaire d'au moins une carte électronique de commande, de manière automatique. Dans une autre variante de réalisation, le système de réglage de l'inclinaison du moteur (5) peut tout aussi bien être manuel, par exemple avec des nivelles à lecture directe, visibles par l'utilisateur.

Dans la variante de réalisation représentée à la figure 2, le boîtier (1) comporte une interface entre l'utilisateur et le système selon l'invention. Cette interface comprend un écran d'affichage (13) et des boutons de commande (14). L'utilisateur utilise cette interface pour régler par exemple des paramètres tels que la vitesse de rotation de la tête mobile (2) ou l'inclinaison d'un plan laser devant être balayé par le système. Le système selon l'invention peut aussi comporter une console avec écran d'affichage et boutons de commande pour contrôler par exemple ledit module de détermination et de réglage de l'inclinaison. Une telle console permet aussi de contrôler la carte électronique de détection de la position du codeur (52) et de commande du moteur (5).

L'invention va être à présent décrite en référence à la figure 4.

Dans un mode de réalisation de l'invention, le générateur de faisceau laser est incorporé dans un module de détermination de l'inclinaison constitué d'un corps (3) qui intègre également deux ou trois niveaux (30, 31) permettant la détection du niveau dans un plan horizontal et vertical. Comme illustré à la figure 3, le positionnement de la source laser peut être réalisé avec précision à l'aide de deux niveaux (30) positionnés dans des directions (OX, OY) perpendiculaires et situés dans un plan orientable par rapport au plan d'appui sur lequel repose le socle du boîtier (1). L'orientation du faisceau laser, affinée grâce à ces deux niveaux (30), doit être perpendiculaire au plan de référence défini par ces niveaux (30). Ces deux niveaux (30) détectent la position relative du générateur de faisceau laser par rapport à ce plan de référence. Un troisième niveau (31) dit vertical et perpendiculaire aux deux autres peut être incorporé dans le corps (3) contenant le générateur de faisceau laser.

Dans le mode de réalisation préféré de l'invention, ces niveaux (30, 31) incorporés au corps (3) contenant le générateur de faisceau laser sont des nivelles électroniques à lecture optique. Cette lecture optique est par exemple effectuée à l'aide d'au moins une carte électronique (4). La carte électronique (4) dite de lecture peut comporter des photodétecteurs placés en vis-à-vis des nivelles électroniques à lecture optique. La carte électronique (4) de lecture est positionnée au-dessus du corps (3) du générateur de faisceau laser et comporte un orifice central laissant passer ledit faisceau. Cette carte (4) peut comprendre des moyens de pilotage de vérins (11) électriques réglables ou d'autres moyens de compensation d'inclinaison à moteur d'asservissement permettant le positionnement et l'orientation de la source laser de manière très précise. On peut générer ainsi un plan laser rigoureusement horizontal si par exemple le boîtier (1) est positionné sur un plan d'appui par son socle. Le faisceau laser est produit après collimation, par l'intermédiaire d'au moins une lentille de collimation, de cette source laser.

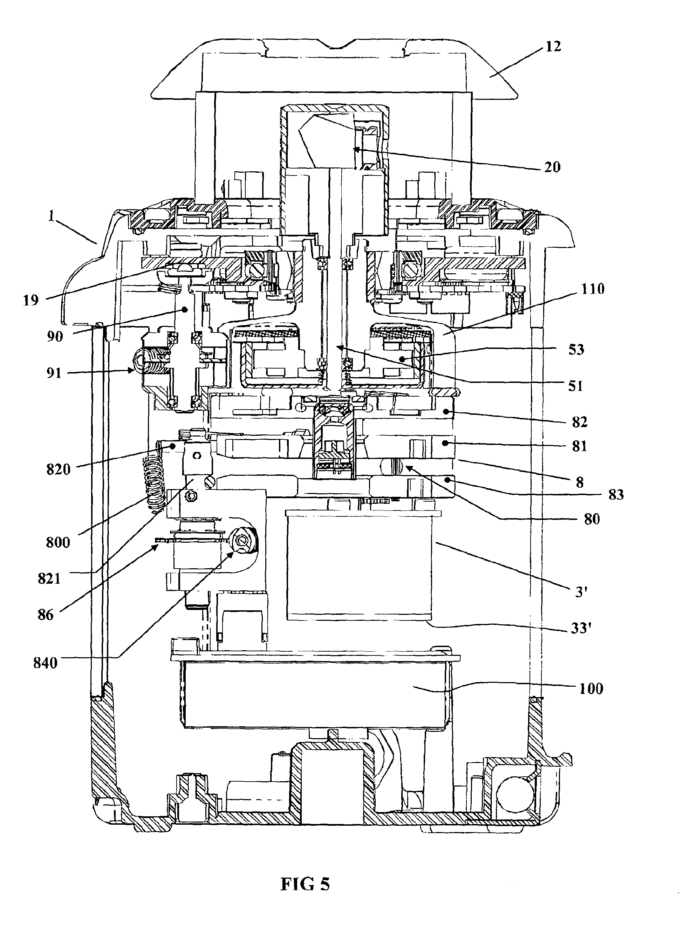

Une autre variante de l'invention va être à présent décrite en référence aux figures 5, 6 et 7.

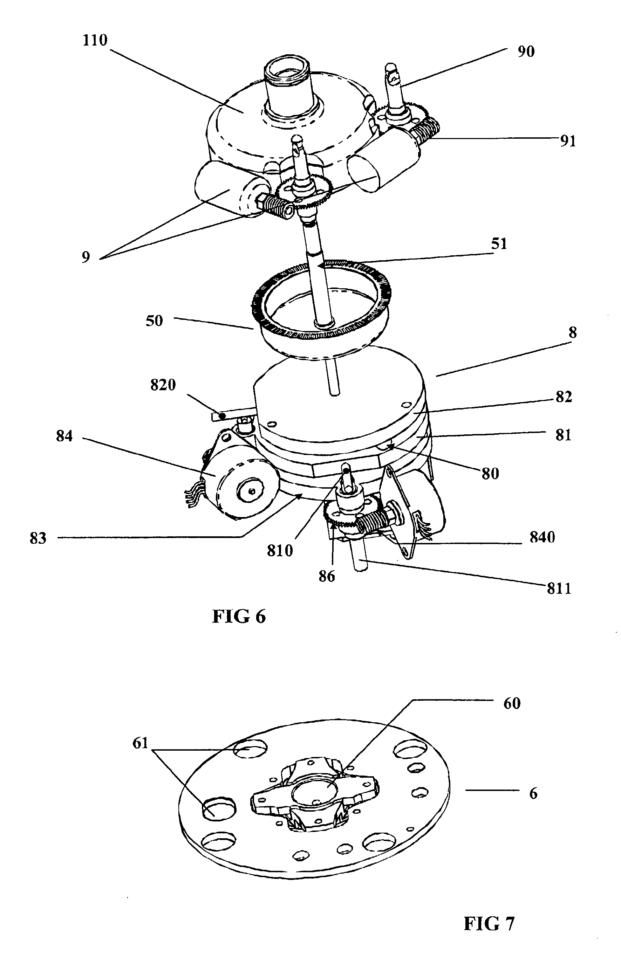

La figure 5 est une vue en coupe selon le plan AA de la figure 2. Dans la forme de réalisation illustrée à la figure 5, un dispositif à simple ou double pente (8) est ajouté et sépare le module de rotation (5), placé au-dessus, du bloc (3') de détermination de niveau à nivelles, placé en dessous. Comme illustré à la figure 6, le dispositif à double pente (8) comprend un plateau support de base (83), un plateau supérieur (82) et un plateau inférieur (81) mobiles. Un des plateaux (81) du dispositif à double pente (8) est commun aux deux pentes. Une première pente est formée entre le plateau support de base (83) et le plateau inférieur (81) et une seconde pente est formée entre le plateau le plateau inférieur (81) et le plateau supérieur (82). Le plateau supérieur (82) repose sur deux billes (80) qui forment un premier axe et le plateau inférieur (81) repose sur deux billes (80) qui forment un second axe perpendiculaire au premier. Dans un mode de réalisation de l'invention, les deux axes formés par les billes (80) sont décalés par rapport au centre des plateaux (81, 82). Chacun des plateaux (81, 82) comporte un manche (810, 820) en saillie sensiblement parallèle au plan du plateau (81, 82). Chaque manche (810, 820) est sollicité en appui sur des vérins ou poussoirs (811, 821) par des moyens de rappel élastique (800) tels que des ressorts. Ces vérins ou poussoirs (811, 821) font partie d'un appareillage électromécanique commandé par les informations entrées par l'utilisateur depuis l'interface. Dans le mode de réalisation illustré à la figure 6, les vérins ou poussoirs (811, 821) poussent verticalement et de manière ascendante les manches (810, 820) des plateaux (81, 82) mobiles articulés par deux billes (80). De manière plus générale, pour chaque plateau (81, 82), les deux billes (80) forment une génératrice d'un plan et sont sollicitées selon une autre génératrice de ce plan par lesdits moyens de rappel élastique (800) vers une position de rappel et dans l'autre sens par les poussoirs (811, 821). Le support de base (83) du dispositif à double pente (8) est solidaire d'un bloc (3') de détermination de niveau qui inclue les nivelles. Le plateau supérieur (82) est solidaire du moteur sans balai (5) et également, dans un mode de réalisation de l'invention, du générateur de faisceau laser. Les poussoirs (811, 821) utilisés dans le dispositif à double pente (8) peuvent être déplacés à l'aide de micro-moteurs pas à pas (84). Ces micro-moteurs font tourner par exemple une vis sans fin (840) entraînant une roue dentée (86) pour élever ou rabaisser très progressivement lesdits poussoirs (811, 821). Un dispositif à simple pente comprenant un seul plateau mobile sur deux billes et un plateau support peut remplacer le dispositif à double pente (8).

La disposition non centrée des billes (80) dans le dispositif à double pente (8) permet de réduire les dimensions des plateaux mobiles (81, 82). Ces plateaux (81, 82) ont par exemple un diamètre de l'ordre de la dizaine de centimètres. Les inévitables erreurs d'angle de pente inhérentes à ce type de dispositif sont corrigées à l'aide de facteurs de correction entrés dans une table de correction. Cette table de correction est placée dans une mémoire d'une carte électronique qui gère ledit appareillage électromécanique. Avec un tel dispositif (8), l'inclinaison du module de rotation (5) par rapport au plan rigoureusement horizontal ou vertical défini par les nivelles est réalisée de manière très précise. L'interface entre l'utilisateur et le système selon l'invention comprend des moyens d'introduction des deux valeurs d'angle souhaitées correspondant d'une part à l'angle de rotation du plateau inférieur (81) autour d'un premier axe formé par deux billes (80) et d'autre part à l'angle de rotation du plateau supérieur (82) autour d'un second axe formé par deux autres billes (80) et orthogonal au premier axe. La carte électronique qui gère ledit appareillage électromécanique comprend des moyens de lecture des facteurs de correction. Ces facteurs de correction, liés à la géométrie du système, sont pris en compte par la carte électronique qui gère l'appareillage électromécanique. Cette inclinaison peut être réglée à +/-6° avec une erreur de pente d'au plus 0,01%. Ainsi, pour un rayon de 100 m balayé par le système selon l'invention, l'erreur ne sera que d'au plus 1 cm.

Dans les modes de réalisation avec dispositif à double pente (8), lesdits moyens de positionnement solidaires du générateur de faisceau laser pour régler initialement, lors de l'élaboration de l'appareil, le faisceau laser de manière droite dans le boîtier (1) sont par exemple des éléments de vissage/calage fixés au bloc (3') à nivelles, par exemple à la base (33') de ce bloc (3'). Ledit module supérieur (110) comprend deux axes articulés entre eux à l'aide d'un joint de cardan avec croisillon perforé pour ne pas obturer le puits central par lequel chemine le faisceau laser. Le croisillon permet de conserver une direction précise dans la variante avec dispositif à double pente (8).

Dans le mode de réalisation de la figure 6, le module de détermination et de réglage de l'inclinaison par rapport à un niveau de référence donné par les nivelles comprend des organes de mise à niveau solidaires du module d'entraînement en rotation de la tête mobile (2). Ces organes de mise à niveau sont constitués notamment de micro-moteurs (9) avec vis sans fin (91) qui entraînent chacun une vis micrométrique (90). Les vis micrométriques (90) viennent par exemple en appui contre des surfaces de contact (19) fixes du boîtier (1), selon un axe vertical du boîtier (1). Par ajustement des vis micrométriques (90), ces organes de mise à niveau inclinent un élément fixe en rotation solidaire du stator (53) du moteur (5). Le stator (53) est par exemple porté par un plateau fixe (6) du boîtier (1). La jonction (60) entre ce plateau fixe (6) et le stator (53) permet une inclinaison dans toutes les directions d'au moins 6° du stator (53) par rapport à l'alignement correspondant à la verticalité du boîtier (1). Ce plateau (6) comporte des orifices (61) pour recevoir des éléments d'armature du boîtier (1).

La figure 5 et la figure 6 représentent un mode de réalisation à double pente avec trois plateaux plans (81, 82, 83). Lorsque le boîtier est en appui sur son socle, l'appareil selon la figure 5 ou 6 permet dans un premier temps la recherche de la verticalité par le module de détermination et de réglage de l'inclinaison du générateur de laser, grâce notamment au bloc (3') à nivelles et aux organes de mise à niveau. Puis dans un second temps, cet appareil permet une inclinaison relative du module de rotation (5) et du générateur de faisceau par rapport au bloc (3') détermination de niveau en faisant varier l'angle ou les angles d'inclinaison d'au moins un plateau mobile (81, 82).

Un des avantages de l'invention réside dans l'intégration des composants du système de détermination de niveau et dans la robustesse obtenue par rapport à des appareils à l'instrumentation plus délicate. Le boîtier (1) intègre en effet de manière sensiblement alignée un module pour générer un faisceau laser vertical par rapport au boîtier (1). De plus la précision atteinte est très élevée grâce à l'utilisation des nivelles pour corriger toute erreur d'inclinaison.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système modulaire de détermination de niveau par laser, comportant dans un boîtier (1) un générateur de faisceau laser solidaire de moyens de positionnement par rapport à un plan parallèle au plan de base (B) dudit boîtier (1), le faisceau laser étant orienté vers un puits central du boîtier (1) occulté par aucun obstacle et traversant au préalable des moyens de collimation, un module d'entraînement en rotation d'un ensemble optique comprenant au moins un plan de réflexion, ledit module d'entraînement en rotation étant disposé selon une direction sensiblement coaxiale avec l'axe du faisceau laser, **caractérisé par le fait que** le module d'entraînement en rotation dudit ensemble optique comprend un moteur sans balai (5) à commutation électronique aligné avec le puits central du boîtier (1) et le faisceau laser, le moteur sans balai (5) ayant un arbre creux (51) et un stator (53) suspendu à un élément fixe en rotation autour d'un axe parallèle à celui du faisceau laser, ledit élément fixe étant inclinable par un module de détermination et de réglage de l'inclinaison par rapport à un plan de référence parallèle au plan d'appui de l'enveloppe du boîtier (1), ledit générateur de faisceau laser étant incorporé avec deux niveaux (30, 31) dans un corps (3) solidaire du moteur sans balai (5).

2. Système modulaire de détermination de niveau par laser selon la revendication 1, dans lequel ledit moteur sans balai (5) comprend un stator bobiné (53), un rotor (50) à aimant permanent et un codeur optique (52) lié au rotor par l'arbre creux (51) du moteur (5), ledit codeur optique (52), incrémental et associé à des moyens électroniques de détection de la position du rotor (50), permettant de connaître avec précision la position du rotor (50), la position du faisceau laser et de contrôler la rotation ou les oscillations entre deux positions du moteur (5).

3. Système modulaire de détermination de niveau par laser selon la revendication 2, dans lequel lesdits moyens électroniques de détection de la position du rotor (50) comprennent au moins une carte électronique de détection de la position du codeur optique (52) et de commande du moteur (5).

4. Système modulaire de détermination de niveau par laser selon l'une quelconque des revendications 1 à 3, dans lequel ledit module de détermination et de réglage de l'inclinaison comporte des moyens de réglage d'inclinaison manuels dudit élément fixe en rotation.

5. Système modulaire de détermination de niveau par laser selon l'une quelconque des revendications 1 à 3, dans lequel ledit module de détermination et de réglage de l'inclinaison comporte un dispositif à au moins deux organes de mise à niveau dudit élément fixe en rotation, ces organes de mise à niveau incluant notamment un micro-moteur (9) servant au calage d'au moins une vis (90) vissée selon un axe vertical du boîtier (1).

6. Système modulaire de détermination de niveau par laser selon l'une quelconque des revendications 1 à 3, dans lequel ledit module de détermination et de réglage de l'inclinaison comporte un dispositif à deux vérins (11) solidaires de deux angles dudit élément fixe en rotation et ledit module d'entraînement en rotation, les deux vérins (11) servant à effectuer un déplacement relatif de l'axe d'inclinaison dudit module d'entraînement en rotation par rapport à l'axe constituant la verticalité du boîtier (1).

7. Système modulaire de détermination de niveau par laser selon la revendication 6, dans lequel lesdits vérins (11) sont électriques, le pilotage de ces vérins (11) étant réalisé par l'intermédiaire d'au moins une carte électronique de commande (4).

8. Système modulaire de détermination de niveau par laser selon l'une quelconque des revendications 1 à 3, dans lequel deux niveaux (30) perpendiculaires l'un à l'autre et positionnés dans un plan parallèle au plan de base (B) sur lequel repose le socle du boîtier (1) sont incorporés dans un corps (3) incluant le générateur de faisceau laser, la direction du faisceau laser étant orientée par rapport audit plan de base (B), ces deux niveaux (30) détectant la position relative du générateur de faisceau laser par rapport à un plan de référence.

9. Système modulaire de détermination de niveau par laser selon la revendication 8, dans lequel un troisième niveau (31) dit vertical et perpendiculaire aux deux autres (30) est incorporé au corps (3) incluant le générateur de faisceau laser pour détecter la position relative du générateur de faisceau laser par rapport à un plan de référence.

10. Système modulaire de détermination de niveau par laser selon la revendication 8 ou 9, dans lequel les niveaux (30, 31) incorporés avec le générateur de faisceau laser sont des nivelles électroniques à lecture optique, la lecture optique étant effectuée par l'intermédiaire d'au moins une carte électronique (4).

11. Système modulaire de détermination de niveau par laser selon l'une quelconque des revendications 1 à 10, dans lequel ledit module de détermination et de réglage de l'inclinaison de l'élément fixe en rotation comprend un circuit imprimé, des photodétecteurs et des moyens actionneurs déterminant l'inclinaison de ce module par rapport au socle du boîtier (1).

12. Système modulaire de détermination de niveau par laser selon l'une quelconque des revendications 1 à 11, dans lequel ledit ensemble optique rotatif comprend un pentaprisme (20) tournant, le générateur de faisceau laser, équipé d'une diode laser, étant aligné avec ledit arbre creux (51) et ledit pentaprisme (20) selon un axe orienté selon la verticalité du boîtier (1), ledit pentaprisme (20) étant orienté pour réfléchir le faisceau laser d'un angle de sensiblement 90°.

13. Système modulaire de détermination de niveau par laser selon l'une quelconque des revendications 1 à 12, dans lequel lesdits moyens de positionnement par rapport à un plan parallèle au plan de base (B) dudit boîtier (1) comprennent au moins un élément de vissage réglable manuellement.

14. Système modulaire de détermination de niveau par laser selon l'une quelconque des revendications 1 à 12, dans lequel lesdits moyens de positionnement par rapport à un plan parallèle au plan de base (B) dudit boîtier (1) comprennent au moins un vérin électrique.

15. Système modulaire de détermination de niveau par laser selon l'une quelconque des revendications 1 à 14, comportant un dispositif à double pente (8), chaque pente étant composée notamment par deux plateaux, au moins un de ces plateaux (81, 82) étant mobile et articulé par l'intermédiaire d'au moins deux billes (80), les deux billes (80) constituant une génératrice d'un plan et étant sollicitées selon une autre génératrice de ce plan par un moyen élastique (800) vers une position de rappel et dans l'autre sens par un appareillage électromécanique permettant de régler l'inclinaison de pente

16. Système modulaire de détermination de niveau par laser selon la revendication 15, dans lequel un des plateaux (81) du dispositif à double pente (8) est commun aux deux pentes.

17. Système modulaire de détermination de niveau par laser selon les revendications 15 ou 16, dans lequel les plateaux mobiles (81, 82) du dispositif à double pente (8) sont montés pivotant par rapport audites deux billes (80), les axes de rotation des plateaux mobiles (81, 82) étant orientés perpendiculairement.

18. Système modulaire de détermination de niveau par laser selon l'une quelconque des revendications 15, 16 ou 17, dans lequel ledit appareillage électromécanique comporte au moins deux moteurs pas à pas (9) gérés par des moyens de commande électroniques tenant compte de valeurs représentatives des angles de rotation des plateaux mobiles (81, 82) saisies par l'utilisateur sur une interface et d'au moins une table de correction.

19. Système modulaire de détermination de niveau par laser selon l'une quelconque des revendications 8 à 14, comportant un dispositif à simple pente positionné entre ledit moteur sans balai (5) et l'emplacement des niveaux (30, 31).

20. Système modulaire de détermination de niveau par laser selon l'une quelconque des revendications 1 à 19, dans lequel le boîtier (1) comprend des moyens de préhension (10) et un logement destiné à une batterie (100) fermé à l'aide d'un couvercle amovible, une console avec écran d'affichage (13) et boutons de commande (14) étant associée audit boîtier (1) pour contrôler notamment ledit module de détermination et de réglage de l'inclinaison et la carte électronique de détection de la position du codeur (52) et de commande du moteur (5).

## Claims

1. Modular system for level determination by laser, comprising in a housing (1) a laser beam generator which is fixed to means for positioning with respect to a plane parallel to the base plane (B) of the said housing (1), the laser beam being oriented towards a central chamber of the housing (1) which is not obscured by any obstacle and firstly passing through collimation means, wherein a module for driving an optical assembly in rotation comprises at least one plane of reflection, the said module for driving in rotation being disposed along a direction substantially coaxial with the axis of the laser beam, **characterised in that** the module for driving the said optical assembly in rotation comprises a brushless motor (5) with electronic switching aligned with the central chamber of the housing (1) and the laser beam, the brushless motor (5) having a hollow shaft (51) and a stator (53) suspended on an element which is fixed in rotation about an axis parallel to that of the laser beam, the said fixed element being capable of being inclined by a module for determination and adjustment of the inclination with respect to a plane of reference parallel to the bearing plane of the enclosure or the housing (1), the said laser beam generator being incorporated with two levels (30, 31) in a body (3) fixed to the brushless motor (5).

2. Modular system for level determination by laser according to Claim 1, wherein the said brushless motor (5) comprises a wound stator (53), a rotor (50) with a permanent magnet and an optical encoder (52) connected to the rotor by the hollow shaft (51) of the motor (5), the said optical encoder (52) being incremental and associated with electronic means for detection of the position of the rotor (50) and making it possible to know precisely the position of the rotor (50), the position of the laser beam and to check rotation or oscillations between two positions of the motor (5).

3. Modular system for level determination by laser according to Claim 2, wherein the said electronic means for detection of the position of the rotor (50) comprise at least one electronic card for detection of the position of the optical encoder (52) and for control of the motor (5).

4. Modular system for level determination by laser according to any one of Claims 1 to 3, wherein the said module for determination and adjustment of the inclination includes manual means for adjustment of the inclination of the said element which is fixed in rotation.

5. Modular system for level determination by laser according to any one of Claims 1 to 3, wherein the said module for determination and adjustment of the inclination includes a device with at least two components for levelling of the said element which is fixed in rotation, these levelling components including in particular a micro-motor (9) which serves for adjustment of at least one screw (90) screwed along a vertical axis of the housing (1).

6. Modular system for level determination by laser according to any one of Claims 1 to 3, wherein the said module for determination and adjustment of the inclination includes a device with two jacks (11) fixed to two corners of the said element which is fixed in rotation and the said module for driving in rotation, the two jacks (11) serving to effect a relative displacement of the axis of inclination of the said module for driving in rotation with respect to the vertical axis of the housing (1).

7. Modular system for level determination by laser according to Claim 6, wherein the said jacks (11) are electric, these jacks (11) being controlled by way of at least one electronic control card (4).

8. Modular system for level determination by laser according to any one of Claims 1 to 3, wherein two levels (30) which are perpendicular to one another and positioned in a plane parallel to the base plane (B) on which the base of the housing (1) rests are incorporated in a body (3) including the laser beam generator, the direction of the laser beam being oriented with respect to the said base plane (B), wherein these two levels (30) detect the relative position of the laser beam generator with respect to a reference plane.

9. Modular system for level determination by laser according to Claim 8, wherein a third vertical level (31) perpendicular to the other two levels (30) is incorporated into the body (3) including the laser beam generator in order to detect the relative position of the laser beam generator with respect to a reference plane.

10. Modular system for level determination by laser according to Claim 8 or Claim 9, wherein the levels (30, 31) incorporated into the laser beam generator are optically readable electronic levels, the optical reading being effected by means of at least one electronic card (4).

11. Modular system for level determination by laser according to any one of Claims 1 to 10, wherein the said module for determination and adjustment of the inclination of the element which is fixed in rotation comprises a printed circuit, photodetectors and actuator means which determine the inclination of this module with respect to the base of the housing (1).

12. Modular system for level determination by laser according to any one of Claims 1 to 11, wherein the said rotary optical assembly comprises a rotating pentaprism (20), the laser beam generator equipped with a laser diode being aligned with the said hollow shaft (51) and the said pentaprism (20) along an axis oriented according to the verticality of the housing (1), the said pentaprism (20) being oriented so as to reflect the laser beam by an angle of substantially 90°.

13. Modular system for level determination by laser according to any one of Claims 1 to 12, wherein the said means for positioning with respect to a plane parallel to the base plane (B) of the said housing (1) comprise at least one manually adjustable screwing element.

14. Modular system for level determination using a laser according to any one of Claims 1 to 12, wherein the said means for positioning with respect to a plane parallel to the base plane (B) of the said housing (1) comprise at least one electric jack.

15. Modular system for level determination using a laser according to any one of Claims 1 to 14, including a double-slope device (8), each slope being composed in particular of two plates, at least one of these plates (81, 82) being movable and articulated by means of at least two balls (80), the two balls (80) forming a generating line of a plane and being loaded along another generating line of this plane by an elastic means (800) towards a return position and in the other direction by electromagnetic equipment enabling adjustment of the slope inclination.

16. Modular system for level determination using a laser according to Claim 15, wherein one of the plates (81) of the double-slope device (8) is common to the two slopes.

17. Modular system for level determination using a laser according to Claim 15 or Claim 16, wherein the movable plates (81, 82) of the double-slope device (8) are mounted so as to pivot with respect to the said two balls (80), the axes of rotation of the movable plates (81, 82) being oriented perpendicular to each other.

18. Modular system for level determination using a laser according to any one of Claims 15, 16 or 17, wherein the said electromagnetic equipment includes at least two stepping motors (9) managed by electronic control means which take account of values representing angles of rotation of the movable plates (81, 82) input by the user on an interface and at least one correction table.

19. Modular system for level determination using a laser according to any one of Claims 8 to 14, including a single-slope device positioned between the said brushless motor (5) and the location of the levels (30, 31).

20. Modular system for level determination using a laser according to any one of Claims 1 to 19, wherein the housing (1) comprises gripping means (10) and a compartment intended for a battery (100) which is closed with the aid of a removable cover, a console with a display screen (13) and control buttons (14) being associated with the said housing (1) in order in particular to control the said module for determination and adjustment of the inclination and the electronic card for detection of the position of the encoder (52) and for control of the motor (5).

## Patentansprüche

1. Modulares System zur Höhenbestimmung mittels Laser, das in einem Gehäuse (1) aufweist: einen Laserstrahlgenerator, der mit Mitteln zum Positionieren relativ zu einer zu der Basisebene (B) parallelen Ebene des Gehäuses (1) einstückig ist, wobei der Laserstrahl in Richtung zu einem durch kein Hindernis verdeckten zentralen Schacht des Gehäuses (1) ausgerichtet ist und zunächst Kollimationsmittel durchläuft, ein Modul zum drehbaren Antreiben einer mindestens eine Reflexionsebene aufweisenden optischen Anordnung, wobei das Modul zum drehbaren Antreiben entlang einer zu der Achse des Laserstrahls im Wesentlichen koaxialen Richtung angeordnet ist, **dadurch gekennzeichnet, dass** das Modul zum drehbaren Antreiben der optischen Anordnung einen zu dem zentralen Schacht des Gehäuses (1) und dem Laserstrahl ausgerichteten bürstenlosen Motor (5) mit elektronischer Schaltung aufweist, wobei der bürstenlose Motor (5) eine Hohlwelle (51) und einen Stator (53) aufweist, der an einem Element aufgehängt ist, das um eine zu der Achse des Laserstrahls parallelen Achse drehfest ist, wobei das feste Element durch ein Modul zum Bestimmen und Verstellen der Neigung relativ zu einer zu der Auflageebene des Mantels des Gehäuses (1) parallelen Referenzebene schrägstellbar ist, wobei der Laserstrahlgenerator mit zwei Nivelliervorrichtungen (30, 31) in einen mit dem bürstenlosen Motor (5) einstückigen Körper (3) integriert ist.

2. Modulares System zur Höhenbestimmung mittels Laser gemäß Anspruch 1, wobei der bürstenlose Motor (5) einen gewickelten Stator (53), einen Rotor (50) mit Dauermagnet und einen optischen Codierer (52) aufweist, der über die Hohlwelle (51) des Motors (5) an den Rotor angeschlossen ist, wobei der optische Codierer (52), der ein Inkremental-Codierer ist und elektronischen Mitteln zum Detektieren der Position des Rotors (50) zugeordnet ist, ein genaues Erkennen der Position des Rotors (50) und der Position des Laserstrahls sowie ein Steuern der Drehung oder des Pendelns zwischen zwei Positionen des Motors (5) zulässt.

3. Modulares System zur Höhenbestimmung mittels Laser gemäß Anspruch 2, wobei die elektronischen Mittel zum Detektieren der Position des Rotors (50) mindestens eine elektronische Karte zum Detektieren der Position des optischen Codierers (52) und zum Steuern des Motors (5) aufweisen.

4. Modulares System zur Höhenbestimmung mittels Laser gemäß einem der Ansprüche 1 bis 3, wobei das Modul zum Bestimmen und zum Verstellen der Neigung manuelle Neigungs-Verstellmittel des drehfesten Elements aufweist.

5. Modulares System zur Höhenbestimmung mittels Laser gemäß einem der Ansprüche 1 bis 3, wobei das Modul zum Bestimmen und zum Verstellen der Neigung eine Vorrichtung mit mindestens zwei Nivellierungsmitteln für das drehfeste Element aufweist, wobei die Nivellierungsmittel insbesondere einen Mikromotor (9) aufweisen, der dem Feststellen mindestens einer entlang einer vertikalen Achse des Gehäuses (1) verschraubten Schraube (90) dient.

6. Modulares System zur Höhenbestimmung mittels Laser gemäß einem der Ansprüche 1 bis 3, wobei das Modul zum Bestimmen und zum Verstellen der Neigung eine Vorrichtung mit zwei Zylindern (11), die mit zwei Ecken des drehfesten Elements einstückig sind, und das Modul zum drehbaren Antreiben aufweist, wobei die beiden Zylinder (11) dazu dienen, eine Bewegung relativ zu der Neigungsachse des Moduls zum drehbaren Antreiben gegenüber der die Vertikale des Gehäuses (1) bildenden Achse durchzuführen.

7. Modulares System zur Höhenbestimmung mittels Laser gemäß Anspruch 6, wobei die beiden Zylinder (11) elektrisch sind, wobei das Steuern der beiden Zylinder (11) mittels mindestens einer elektronischen Steuerkarte (4) erfolgt.

8. Modulares System zur Höhenbestimmung mittels Laser gemäß einem der Ansprüche 1 bis 3, wobei zwei Nivellierinstrumente (30), die senkrecht zueinander und in einer Ebene parallel zu der Basisebene (B), auf welcher der Sockel des Gehäuses (1) aufliegt, angeordnet sind, in einen den Laserstrahlgenerator aufweisenden Körper (3) integriert sind, wobei die Richtung des Laserstrahls relativ zu der Basisebene (B) ausgerichtet ist, wobei die beiden Nivellierinstrumente (30) die relative Position des Laserstrahlgenerators im Verhältnis zu einer Referenzebene detektieren.

9. Modulares System zur Höhenbestimmung mittels Laser gemäß Anspruch 8, wobei ein als vertikal und senkrecht zu den anderen beiden (30) bezeichnetes drittes Nivellierinstrument (31) in den den Laserstrahlgenerator aufweisenden Körper (3) integriert ist, um die relative Position des Laserstrahlgenerators im Verhältnis zu einer Referenzebene zu detektieren.

10. Modulares System zur Höhenbestimmung mittels Laser gemäß Anspruch 8 oder 9, wobei die mit dem Laserstrahlgenerator integrierten Nivellierinstrumente (30, 31) elektronische Libellen mit optischer Ablesung sind, wobei die optische Ablesung mittels mindestens einer elektronischen Karte (4) erfolgt.

11. Modulares System zur Höhenbestimmung mittels Laser gemäß einem der Ansprüche 1 bis 10, wobei das Modul zum Bestimmen und zum Verstellen der Neigung des drehfesten Elements einen gedruckten Schaltkreis, Photodetektoren und Betätigungsmittel aufweist, die die Neigung des Moduls im Verhältnis zu dem Sockel des Gehäuses (1) bestimmen.

12. Modulares System zur Höhenbestimmung mittels Laser gemäß einem der Ansprüche 1 bis 11, wobei die drehbare optische Anordnung aufweist: ein sich drehendes Pentaprisma (20), den Laserstrahlgenerator, der mit einer Laserdiode ausgestattet ist und zu der Hohlwelle (51) und dem Pentaprisma (20) entlang einer entlang der Vertikalen des Gehäuses (1) ausgerichteten Achse ausgerichtet ist, wobei das Pentaprisma (20) derart ausgerichtet ist, dass es den Laserstrahl mit einem Winkel von im Wesentlichen 90° reflektiert.

13. Modulares System zur Höhenbestimmung mittels Laser gemäß einem der Ansprüche 1 bis 12, wobei die Mittel zum Positionieren relativ zu einer zu der Basisebene (B) des Gehäuses (1) parallelen Ebene mindestens ein manuell verstellbares Schraubelement aufweisen.

14. Modulares System zur Höhenbestimmung mittels Laser gemäß einem der Ansprüche 1 bis 12, wobei die Mittel zum Positionieren relativ zu einer zu der Basisebene (B) des Gehäuses (1) parallelen Ebene mindestens einen elektrischen Zylinder aufweisen.

15. Modulares System zur Höhenbestimmung mittels Laser gemäß einem der Ansprüche 1 bis 14, aufweisend eine Vorrichtung mit Doppelschräge (8), wobei jede Schräge insbesondere aus zwei Platten zusammengesetzt ist, wobei mindestens eine der Platten (81, 82) bewegbar und durch mindestens zwei Kugeln (80) gelenkig gelagert ist, wobei die beiden Kugeln (80) eine Mantellinie einer Ebene bilden und entlang einer anderen Mantellinie der Ebene durch ein elastisches Element (800) in Richtung zu einer Rückstellposition und in der anderen Richtung durch eine elektromechanische Einrichtung beansprucht werden, die das Verstellen der Neigung der Schrägen zulässt.

16. Modulares System zur Höhenbestimmung mittels Laser gemäß Anspruch 15, wobei eine der Platten (81) der Vorrichtung mit Doppelschräge (8) den beiden Schrägen gemeinsam ist.

17. Modulares System zur Höhenbestimmung mittels Laser gemäß den Ansprüchen 15 oder 16, wobei die bewegbaren Platten (81, 82) der Vorrichtung mit Doppelschräge (8) relativ zu den beiden Kugeln (80) drehbar gelagert sind, wobei die Drehachsen der bewegbaren Platten (81, 82) rechtwinklig ausgerichtet sind.

18. Modulares System zur Höhenbestimmung mittels Laser gemäß einem der Ansprüche 15, 16 oder 17, wobei die elektromechanische Einrichtung mindestens zwei Schrittmotoren (9) aufweist, die von den elektronischen Steuermitteln gesteuert werden, die für die Drehwinkel der bewegbaren Platten (81, 82) repräsentative Werte, die von dem Benutzer über eine Schnittstelle eingegeben werden, und mindestens eine Korrekturtabelle berücksichtigen.

19. Modulares System zur Höhenbestimmung mittels Laser gemäß einem der Ansprüche 8 bis 14, aufweisend eine Vorrichtung mit einfacher Schräge, die zwischen dem bürstenlosen Motor (5) und der Position der beiden Nivellierungsinstrumente (30, 31) angeordnet ist.

20. Modulares System zur Höhenbestimmung mittels Laser gemäß einem der Ansprüche 1 bis 19, wobei das Gehäuse (1) aufweist: Mittel zum Greifen (10) und eine für eine Batterie (100) bestimmte Aufnahme, die mit Hilfe eines abnehmbaren Deckels verschlossen wird, eine Konsole mit einem Anzeigebildschirm (13) und Steuerknöpfen (14), die dem Gehäuse (1) zugeordnet ist, um insbesondere das Modul zum Bestimmen und Verstellen der Neigung und die elektronische Karte zur Detektion der Position des Codierers (52) und zum Steuern des Motors (5) zu steuern.
